# EUROPÄISCHE PATENTANMELDUNG

(11) **EP 3 505 956 A1**
(43) Veröffentlichungstag der Anmeldung: **03.07.2019**
(21) Anmeldenummer: 18203498.3
(22) Anmeldetag: 30.10.2018
(51) Int. Cl.: G01S 7/481, G01S 17/02, H05K 5/00

(54) **TIME-OF-FLIGHT-SENSORMODUL**

(30) Priorität: 29.12.2017 DE 102017131422
(71) Anmelder: HUF Hülsbeck & Fürst GmbH & Co. KG, 42551 Velbert (DE)
(72) Erfinder: STICHERLING, Nadine, 45257 Essen (DE); KOTT, Christopher, 42109 Wuppertal (DE); THAU, Wolfgang, 58285 Gevelsberg (DE); WENZEL, Oliver, 40227 Düsseldorf (DE)
(74) Vertreter: Zenz Patentanwälte Partnerschaft mbB

(57) **Zusammenfassung**

Die Erfindung betrifft ein Time-of-Flight-Sensormodul (19) mit einem Gehäuse (12) und einer innerhalb des Gehäuses (12) angeordneten Sensoranordnung.

Das Gehäuse (12) weist eine Schutzfensteranordnung (16) auf, die vor einer Lichtquelle und vor einem Lichtsensor positioniert ist zum Transmittieren von aus der Lichtquelle gesendetem Licht aus dem Gehäuse hinaus durch einen ersten Schutzfensterabschnitt (14) und zum Transmittieren von an einer abzubildenden Szenerie reflektiertem Licht in das Gehäuseinnere hinein durch einen zweiten Schutzfensterabschnitt (15).

Der erste Schutzfensterabschnitt (14) und der zweite Schutzfensterabschnitt (15) sind mittels einer Lichtbarriere (17) teilweise oder vollständig optisch voneinander getrennt sind.

Das Time-of-Flight-Sensormodul (19) weist an einem Moduleinsatz (7) der Sensoranordnung ein erstes Führungselement (13) und ein Steckelement (8) zur mechanischen und elektrischen Kopplung, beispielsweise an ein Kraftfahrzeug, auf.

## Beschreibung

Die Erfindung betrifft ein Time-of-Flight-Sensormodul mit einem Gehäuse und einer innerhalb des Gehäuses angeordneten Sensoranordnung.

Time-of-Flight-Sensoranordnungen, oft auch als als TOF-Sensoranordnung abgekürzt und als Time-of-Flight-Kamera bezeichnet, werden in vielen Anwendungsfeldern genutzt. Die Funktionalität der Time-of-Flight-Sensoranordnungen basiert auf der Laufzeitmessung von Licht.

Bei Betrieb einer Time-of-Flight-Sensoranordnung wird eine Szenerie pulsweise mit einem Beleuchtungsmittel ausgeleuchtet. Um die Störung der Szenerie selbst möglichst gering zu halten, wird häufig Licht, insbesondere Laserlicht, mit einer oder mehreren Wellenlängen im infraroten Wellenlängenbereich, insbesondere im nahen infraroten Wellenlängenbereich, verwendet. Die Laufzeit des emittierten Lichts von dem Beleuchtungsmittel hin zu der Szenerie und, nach der Reflektion durch die Szenerie, zu einem dem Beleuchtungsmittel nahen Lichtsensor, wird gemessen. Time-of-Flight-Sensoranordnungen sind dem Fachmann aus der Praxis bekannt. Time-of-Flight-Sensoranordnungen weisen viele Vorteile auf, insbesondere sind sie konstruktiv vergleichsweise einfach ausgebildet und, beispielsweise sind bewegliche Teile verzichtbar, was mit hoher Verfügbarkeit und vergleichsweise geringer Anfälligkeit für Schäden einhergeht. Weitere Vorteile sind eine hohe Bilderfassungsgeschwindigkeit sowie eine zuverlässige Bilderfassung bei einer Vielzahl von möglichen Oberflächen. Auch die Möglichkeit der Nutzung als 3D-Kamerasysteme ist ein Grund für die zunehmende Verbreitung der Time-of-Flight-Sensoranordnungen.

Time-of-Flight-Sensoranordnungen haben, nicht zuletzt aufgrund der oben genannten Vorteile, eine Vielzahl von Anwendungen gefunden. Nicht zuletzt werden Time-of-Flight-Sensoranordnungen bei Kraftfahrzeugen zunehmend eingesetzt, beispielsweise in Fahrassistenzanwendungen und als Sicherheitssensoren oder auch als Sensoren zur Gestensteuerung des Kraftfahrzeugs.

Um Time-of-Flight-Sensoranordnungen in hohen Stückzahlen und damit möglichst kostengünstig bereitstellen zu können, besteht der Wunsch nach universell verwendbaren Time-of-Flight-Sensoranordnungen, die trotz ihrer universellen Verwendbarkeit zuverlässig eine möglichst gute Darstellungsqualität der dargestellten Szenerien bieten.

Die Aufgabe wird mit einem Time-of-Flight-Sensormodul mit den Merkmalen des Anspruchs 1 gelöst. Das Time-of-Flight-Sensormodul weist eine Sensoranordnung auf, die innerhalb eines Gehäuses angeordnet ist. Das Gehäuse muss die Sensoranordnung nicht zwingend komplett umschließen, es dient jedoch dem Zweck, wenigstens die optischen Bestandteile der Sensoranordnung vor äußeren Einwirkungen, wie beispielsweise Zugänglichkeit für Staub, zu schützen. Der modulartige Charakter des TOF-Sensormoduls ergibt sich dadurch, dass die TOF-Sensoranordnung innerhalb des schützenden Gehäuses angeordnet ist.

Die Sensoranordnung weist zumindest eine Lichtquelle, einen Lichtsensor sowie eine Steuereinrichtung auf. Die Steuereinrichtung ist mit der Lichtquelle und dem Lichtsensor gekoppelt.

Die Lichtquelle ist ausgebildet, Licht auszusenden, mit dem eine abzubildende Szenerie ausgeleuchtet wird. Der Begriff des Lichts umfasst nicht nur für das menschliche Auge sichtbares Licht, sondern auch Licht mit Wellenlängen aus dem Infrarot- und aus dem Ultraviolettbereich. Bei Time-of-Flight-Sensoranordnungen ist in vielen Fällen, wie eingangs bereits erwähnt, die Verwendung von Licht mit einer oder mehreren Wellenlängen aus dem Infrarotbereich üblich, wobei auch die Nutzung von Licht mit anderen Wellenlängen nicht ausgeschlossen ist.

Der vorgesehene Lichtsensor ist ausgebildet, zum Lichtsensor gelangendes Licht zumindest der Wellenlänge des von der Lichtquelle ausgesendeten Lichts zu detektieren. So kann mittels des Lichtsensors aus der Lichtquelle ausgesendetes und danach von der abzubildenden Szenerie reflektiertes Licht, das zu dem Lichtsensor gelangt, von diesem erfasst werden.

Die mit der Lichtquelle und dem Lichtsensor gekoppelte Steuereinrichtung dient der Ansteuerung der Lichtquelle und des Lichtsensors. Je nach Ausgestaltung kann die Steuereinrichtung zur teilweisen oder vollständigen Auswertung der von dem Lichtsensor detektierten und an die Steuereinrichtung weitergeleiteten Daten eingerichtet sein, aber auch eine Kopplung der Steuereinrichtung an einer kraftfahrzeugseitige Steuer- und/oder Regelungseinrichtung kann vorgesehen sein, welche sodann für alle zum Betrieb des Time-of-Flight-Sensormoduls erforderlichen Schritte eingerichtet ist, die nicht von der Steuereinrichtung des Time-of-Flight-Sensormoduls selbst vorgenommen werden. Bevorzugt ist die Steuereinrichtung jedoch ebenfalls Bestandteil der Sensoranordnung und eingerichtet, die Lichtquelle zum Aussenden von Licht anzusteuern, die Erfassung von reflektiertem Licht zu erkennen und eine Laufzeit des Lichts zu bestimmen, die sodann zur Ableitung von Abstandsinformationen genutzt werden kann.

Das Gehäuse des Time-of-Flight-Sensormoduls weist eine Schutzfensteranordnung auf. Die Schutzfensteranordnung ist vor der Lichtquelle und vor dem Lichtsensor positioniert, um ein Transmittieren von aus der Lichtquelle gesendetem Licht zu einem Gehäuseäußeren und ein Transmittieren von an der abzubildenden Szenerie reflektiertem Licht in das Gehäuseinnere hinein zu dem Lichtsensor hin zu erlauben. Die Schutzfensteranordnung ist zu diesem Zweck entsprechend vor der Lichtquelle und vor dem Lichtsensor positioniert. Die relative Positionierungsangabe mit dem Begriff "vor" ist mit Hinblick auf den vorgesehenen Strahlengang zu verstehen. Das bedeutet, dass, mit anderen Worten, die Schutzfensteranordnung derart vor der Lichtquelle und vor dem Lichtsensor positioniert ist, dass ein vorgesehener Strahlengang von der Lichtquelle zu dem Gehäuseäußeren durch die Schutzfensteranordnung hindurch verläuft sowie ein Strahlengang von aus dem Lichtsensor stammenden, an einer dem Time-of-Flight-Sensormodul im vorgesehenen Betrieb gegenüberliegenden Szenerie reflektiertem Licht in zu dem Lichtsensor hin weisender Richtung durch die Schutzfensteranordnung hindurch verläuft. Wieder mit anderen Worten ist die Schutzfensteranordnung zwischen Lichtquelle und Lichtsensor und der zu erfassenden Szenerie angeordnet.

Die Schutzfensteranordnung weist einen ersten Schutzfensterabschnitt und einen zweiten Schutzfensterabschnitt auf. Der Strahlengang des aus der Lichtquelle emittierten Lichts zu dem Gehäuseäußeren verläuft durch den ersten Schutzfensterabschnitt und der Strahlengang des reflektierten Lichts in das Gehäuse hinein zu dem Lichtsensor verläuft durch den zweiten Schutzfensterabschnitt. Mit anderen Worten ist der erste Schutzfensterabschnitt vor der Lichtquelle angeordnet und der zweite Schutzfensterabschnitt vor dem Lichtsensor angeordnet. In einer speziellen Ausgestaltung kann dies beispielsweise bedeuten, dass eine zentrale optische Achse der Lichtquelle durch den ersten Schutzfensterabschnitt verläuft und eine zentrale optische Achse des Lichtsensors durch den zweiten Schutzfensterabschnitt hindurch verläuft. Es muss nicht zwangsläufig ausgeschlossen sein, dass auch Streulicht des Lichtsensors durch den zweiten Schutzfensterabschnitt hindurchgelangt und/oder reflektiertes Licht durch den ersten Schutzfensterabschnitt zu dem Lichtsensor hingelangt. Wesentlich für die obige Betrachtung ist der für die Bereitstellung der optischen Funktionalität genutzte Anteil des emittierten und/oder reflektierten Lichts.

Erfindungsgemäß ist vorgesehen, dass der erste Schutzfensterabschnitt und der zweite Schutzfensterabschnitt mittels einer Lichtbarriere teilweise oder vollständig optisch voneinander getrennt sind. Mit anderen Worten ist eine Lichtbarriere vorgesehen, welche ein Leiten von Licht von dem ersten Schutzfensterabschnitt zu dem zweiten Schutzfensterabschnitt und/oder von dem zweiten Schutzfensterabschnitt zu dem ersten Schutzfensterabschnitt zumindest teilweise, bevorzugt vollständig, unterbindet.

Die Wirkung der Lichtbarriere ist dabei dahingehend zu verstehen, dass Licht mit einer Wellenlänge aus einem Teil des Wellenlängenspektrums absorbiert und/oder reflektiert wird, letzteres bevorzugt diffus. Besonders bevorzugt ist, dass die Lichtbarrierefunktion zumindest für Licht mit der Wellenlänge oder den Wellenlängen wirksam erfolgt, welches von der Lichtquelle emittiert wird. Es ist besonders bevorzugt, aber nicht für alle Ausgestaltungen der Erfindung zwingend erforderlich, dass die Lichtbarrierefunktion für Licht aller Wellenlängen wirksam ist.

In einer Ausführung der Erfindung kann beispielsweise vorgesehen sein, dass der erste Schutzfensterabschnitt und der zweite Schutzfensterabschnitt jeweils als unabhängige Durchtrittsscheibe ausgebildet sind, wobei die beiden Durchtrittsscheiben mit einem Luftspalt voneinander getrennt sind. In einem solchen Fall ist die Lichtbarriere als Luftspalt ausgebildet.

Alternativ oder zusätzlich kann vorgesehen sein, dass die Lichtbarriere als Barriereelement ausgebildet ist, welches in den Raum, welcher den ersten Schutzfensterabschnitt und den zweiten Schutzfensterabschnitt voneinander trennt, hineingeführt ist. Beispielsweise kann vorgesehen sein, dass die Lichtbarriere teilweise in den zwischen erstem Schutzfensterabschnitt und zweitem Schutzfensterabschnitt vorhandenen Raum eingeführt ist. Auch eine Lichtbarriere, die sich in entlang der Gesamtdicke des ersten Schutzfensterabschnitts und/oder des zweiten Schutzfensterabschnitts in den zwischen den beiden Schutzfensterabschnitten vorhandenen Raum hinein erstreckt, kann vorgesehen sein.

Der Begriff der Lichtbarriere umfasst also zumindest, dass innerhalb der Schutzfensteranordnung ein Übertritt beziehungsweise ein Leiten von Licht von einem der beiden Schutzfensterabschnitte zu dem anderen der beiden Schutzfensterabschnitte zumindest teilweise, bevorzugt vollständig, vermieden wird. Die konkrete Art der Ausgestaltung der Lichtbarriere kann dem Fachmann überlassen werden, da sie von vielen Faktoren abhängig ist, beispielsweise von der Wellenlänge und der Intensität des verwendeten Lichts sowie der geometrischen Ausgestaltung des Time-of-Flight-Sensormoduls. Auch das angestrebte oder noch tolerierte Maß des von der Lichtbarriere absorbierten und/oder reflektierten Lichtanteils kann dem Fachmann überlassen bleiben und empirisch durch Prüfung der Qualität von Testaufnahmen ermittelt werden.

Beispielsweise kann vorgesehen sein, dass die Lichtbarriere sich entlang einer Strecke von wenigstens 50 % der Dicke des ersten Schutzfensterabschnitts und/oder des zweiten Schutzfensterabschnitts in eine zur Lichtstrahlrichtung parallelen Richtung erstreckt. Auch kann beispielsweise vorgesehen sein, dass die Lichtbarriere für die Wellenlängen des von der Lichtquelle emittierten Lichts undurchsichtig ist, beispielsweise weniger als 1 % des auf der Lichtbarriere eintreffenden Lichts transmittiert.

Es hat sich gezeigt, dass die Anordnung einer Lichtbarriere zwischen den beiden Schutzfensterabschnitten, von denen einer der Lichtquelle und einer dem Lichtsensor zugeordnet ist, zu einer besseren Aufnahmequalität der von dem Lichtsensor erfassten Intensitätsdaten geführt hat und insbesondere Hintergrundrauschen minimiert war. Der Grund für die qualitativ festgestellte Verbesserung der Aufnahmequalität konnte nicht abschließend ermittelt werden. Gemäß einer Hypothese der Erfinder könnte bei miteinander verbundenen Schutzfensterabschnitten, im Extremfall bei einem einstückigen Fensters ohne Lichtbarriere, die Schutzfensteranordnung infolge einer ungünstigen Kombination von Gehäusegeometrie und optischen Rahmenbedingungen einen Lichtleitereffekt aufweisen, welcher schwer vorhersagbare, aber jedenfalls im Regelfall nachteilige, Auswirkungen auf die Detektion des reflektierten Lichts durch den Lichtsensor haben.

Es hat sich gezeigt, dass das Einbringen einer Lichtbarriere zwischen erstem Schutzfensterabschnitt und zweitem Schutzfensterabschnitt reproduzierbar zu einer Minimierung von derartigen nachteiligen Effekten, insbesondere zu einer Minimierung des von dem Lichtsensor aufgenommenen Hintergrundrauschens, geführt hat. Das erfindungsgemäße Time-of-Flight-Sensormodul geht dadurch mit einer vorteilhaften verbesserten Aufnahmequalität der erfassten Abbildungen einher, die nicht zuletzt auch den Auswerteaufwand der Abbildungen, beispielsweise durch die Steuereinrichtung oder mit der Steuereinrichtung gekoppelte weitere Auswerteeinrichtungen, reduzieren kann.

Um eine besonders elegante Ausbildung des erfindungsgemäßen Time-of-Flight-Sensormoduls zu erlangen, sind der Lichtsensor und die Lichtquelle der Sensoranordnung gemäß einer bevorzugten Weiterbildung in einem ebenen Bereich einer zumindest abschnittsweise ebenen Platine der Sensoranordnung angeordnet. Die Platine kann, zumindest in dem ebenen Bereich, insbesondere als starre Platine ausgebildet sein.

Um das Time-of-Flight-Sensormodul kosteneffizient herstellen zu können, ist gemäß einer bevorzugten Weiterbildung vorgesehen, dass der erste Schutzfensterabschnitt und der zweite Schutzfensterabschnitt zumindest jeweils eine Außenfläche aufweisen, die parallel zu dem ebenen Abschnitt der zumindest teilweise ebenen Platine orientiert ist. Bevorzugt handelt es sich bei dem ersten Schutzfensterabschnitt und bei dem zweiten Schutzfensterabschnitt um Scheiben mit zumindest abschnittsweise planparallelen Außenflächen, die parallel zu dem ebenen Abschnitt der Platine angeordnet sind. In dieser Ausgestaltung sind die optischen Zentralachsen sowohl von Lichtsensor als auch von Lichtquelle senkrecht zu den Außenflächen der Scheiben der Schutzfensteranordnung orientiert, wobei die optischen Zentralachsen beispielsweise die Rotationsachse der drehsymmetrischen Intensitätsverteilung des emittierten Lichts und eine Ebenennormale des bevorzugt eben ausgebildeten Lichtsensors sein können.

Bevorzugt ist die Lichtbarriere als Zwischenelement ausgebildet, das zwischen dem ersten Schutzfensterabschnitt und dem zweiten Schutzfensterabschnitt angeordnet ist. Insbesondere kann vorgesehen sein, dass die Lichtbarriere derart dimensioniert ist, dass wenigstens 50 %, bevorzugt wenigstens 90 %, der Dicke einer Grenzfläche des ersten Schutzfensterabschnitts oder des zweiten Schutzfensterabschnitts abgedeckt werden. Um die unerwünschte Beeinträchtigung möglichst effizient zu vermindern oder zu verhindern, kann alternativ oder zusätzlich vorgesehen sein, dass die Lichtbarriere sich entlang einer Strecke von wenigstens 90 % einer Längserstreckung der benachbarten Grenzfläche erstreckt.

Besonders bevorzugt ist es, wenn die Lichtbarriere einstückiger Bestandteil des Gehäuses ist, beispielsweise eine Strebe, die sich beispielsweise dadurch ergibt, dass zwei Fensterausnehmungen aus einer Gehäusefläche ausgenommen sind. Eine mit dem Gehäuse einstückige Ausbildung der Lichtbarriere ist aufgrund der potentiell kostengünstigen Herstellung und der mechanischen Stabilität eine vorteilhaft elegante Ausgestaltung des TOF-Sensormoduls.

Eine besonders bevorzugte Weiterbildung des Time-of-Flight-Sensormoduls weist zusätzlich zu der Lichtquelle und dem Lichtsensor eine mit der Steuereinrichtung gekoppelte Spot-Diode auf, die bevorzugt ebenso wie der Lichtsensor und die Lichtquelle auf der Platine angeordnet oder zumindest mit dieser gekoppelt ist. Die Spot-Diode dient dem Zweck, einen außerhalb des Gehäuses befindlichen Zielbereich zu markieren, indem der Zielbereich mit für das gesunde menschliche Auge sichtbarem Licht beleuchtet wird, welches durch die Schutzfensteranordnung transmittiert wird. In Anwendungen, in denen das Time-of-Flight-Sensormodul für ein Erkennen von menschlichen Handlungen benutzt wird, beispielsweise für die Gestensteuerung eines Kraftfahrzeugs, kann dem Bediener auf diese Weise ein möglicher Bereich für die Ausführung der erwarteten Gestensteuerung angezeigt werden. Dadurch, dass die Spot-Diode Bestandteil der Sensoranordnung ist, wird zusätzlich zu der 3D-Abbildung einer abzubildenden Szenerie in vorteilhafter Weise auch die Interaktion mittels des Sensormoduls mit einem Bediener bereitgestellt, ohne dass auf zusätzliche, externe Bauelemente zurückgegriffen werden muss.

In einer bevorzugten Ausgestaltung ist der Lichtsensor auf der Platine zwischen der Lichtquelle und der Spot-Diode positioniert. Die Positionierung der Spot-Diode und die Dimensionierung des zweiten Schutzfensterabschnitts sind bevorzugt derart aufeinander abgestimmt, dass Licht der Spot-Diode zumindest überwiegend, bevorzugt vollständig, durch den zweiten Schutzfensterabschnitt zu dem Gehäuseäußeren transmittiert. Mit anderen Worten: Es ist bevorzugt vorgesehen, dass der Lichtsensor und die Spot-Diode denselben Schutzfensterabschnitt nutzen, nämlich den zweiten Schutzfensterabschnitt, so dass ein dritter Schutzfensterabschnitt nicht erforderlich ist. Dadurch wird unter anderem erreicht, dass auf Basis derselben Gehäusekonstruktion sowohl Time-of-Flight-Sensormodule mit Spot-Diode als auch Time-of-Flight-Sensormodule ohne Spot-Diode gefertigt werden können, ohne dass eine Anpassung von den vom Gehäuseäußeren sichtbaren Bestandteilen des Time-of-Flight-Sensormoduls erforderlich wäre.

In einer bevorzugten Ausgestaltung des TOF-Sensormoduls sind alle drei optischen Elemente, nämlich Lichtquelle, Lichtsensor und Spot-Diode, auf einer ebenen Platine oder einem ebenen Abschnitt einer Platine angeordnet, wobei die Emissionsachsen von Lichtquelle und Spot-Diode sowie eine zentrale Normale des Lichtsensors eine auf der Platine liegende Gerade schneiden.

In einer vorteilhaften Weiterbildung des Sensormoduls weist der zweite Schutzfensterabschnitt einen ersten optischen Abschnitt zur Transmission des reflektierten Licht hin zu dem Lichtsensor sowie einen zweiten optischen Abschnitt zur Transmission des Lichts der Spot-Diode zu dem Gehäuseäußeren auf. Mit anderen Worten: Es kann vorgesehen sein, dass der Schutzfensterabschnitt zwei optische Abschnitte mit unterschiedlichen optischen Eigenschaften aufweist. Die unterschiedlichen optischen Eigenschaften sind insbesondere spezifisch auf den Anwendungszweck des Time-of-Flight-Sensormoduls angepasst. Dadurch sind unterschiedliche Anwendungen des Time-of-Flight-Sensormoduls durch möglich, die über die Anpassung des zweiten Schutzfensterabschnitts keine zwingenden weiteren Anpassungen erfordern.

Gemäß einer Ausgestaltung kann vorgesehen sein, dass zwei den zweiten optischen Abschnitt begrenzende Ebenen, nämlich die beiden Außenflächen des zweiten optischen Abschnitts, welche von dem Licht der Spot-Diode transmittiert werden, nicht parallel zueinander orientiert sind, sondern einen Winkel einschließen, welcher wenigstens 10 Grad, bevorzugt wenigstens 20 Grad, beträgt. Bevorzugt handelt es sich bei dem zweiten optischen Abschnitt um eine Keiloptik, also um eine Keilanordnung, die von der äußeren, erste Grenzebene und der zweiten, inneren Grenzebene des zweiten optischen Abschnitts gebildet wird, indem diese nicht parallel zueinander orientiert sind, sondern einen Winkel einschließen. Mit einer keilartigen Ausformung geht der Vorteil einher, dass es sich um eine leicht und kostengünstig herstellbare Optik handelt.

Durch das Vorsehen eines ersten und eines zweiten optischen Abschnitts sowie einer keilartigen Ausbildung des zweiten optischen Abschnitts wird bewirkt, dass der durch die Spot-Diode markierte Bereich in seiner Position gezielt eingestellt werden kann.

Der Lichtsensor kann insbesondere einen CCD-Chip aufweisen oder als CCD-Chip ausgebildet sein. Die Lichtquelle ist bevorzugt als Laserlichtquelle ausgebildet. Die Lichtquelle weist bevorzugt eine Laserdiode auf oder ist als eine Laserdiode ausgebildet.

Weitere Einzelheiten, Merkmale und Vorteile des Gegenstands der Erfindung ergeben sich aus der nachfolgenden Beschreibung in Zusammenhang mit den Zeichnungen. Die Zeichnungen geben beispielhaft ein Ausführungsbeispiel der Erfindung wieder.

Es versteht sich, dass die vorstehend genannten wie auch die nachfolgend erläuterten Merkmale nicht nur in der jeweils angegebenen Kombination, sondern auch in anderen Kombinationen oder in Alleinstellung verwendbar sind.

Es zeigen:
Fig. 1: eine beispielhafte Ausführungsform einer Sensoranordnung eines erfindungsgemäßen Time-of-Flight-Sensormoduls;
Fig. 2: die Sensoranordnung der Fig. 1 ohne Gehäuse und vor ihrem Zusammenfügen;
Figs. 3 bis 4: eine beispielhafte Ausführungsform eines erfindungsgemäßen TOF-Sensormoduls in zwei Schrägansichten in zwei unterschiedlichen Sichtachsen;
Fig. 5: seitliche Aufsicht auf die Ausführungsform eines TOF-Sensormoduls;
Fig. 6: Schnittstellung im Schnitt A-A gemäß Fig. 3;
Fig. 7: Schrägansicht der Schutzfensteranordnung sowie Darstellung der Ausführungsform des TOF-Sensormoduls ohne Schutzfensteranordnung;
Fig. 8: Darstellung der Schutzfensteranordnung und der beispielhaften TOF-Sensoranordnung;
Fig. 9: Schnitt B-B gemäß Fig. 3;
Fig. 10: Schnitt C-C gemäß Fig. 3.

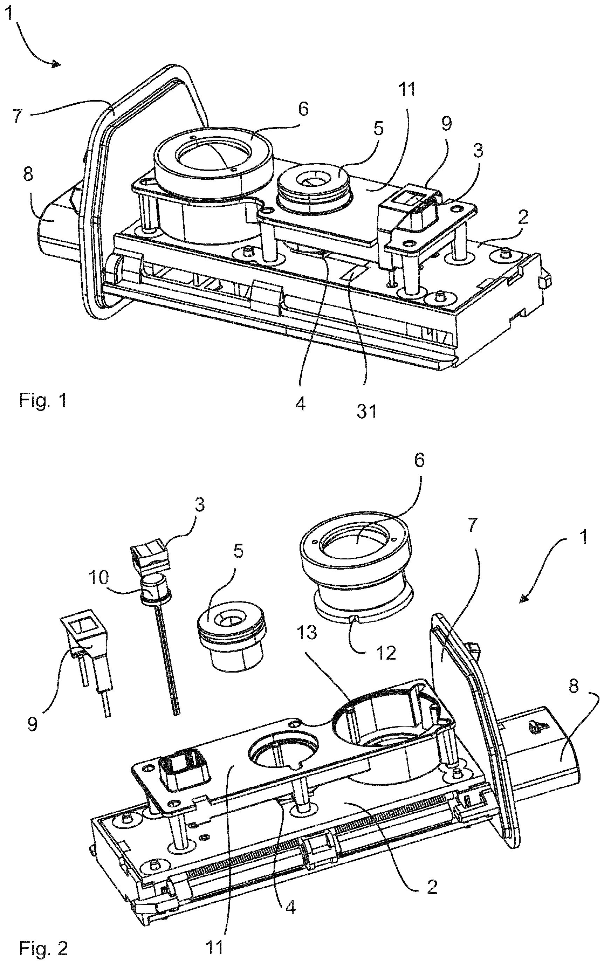

Fig. 1 ist eine Sensoranordnung 1 einer beispielhaften Ausführungsform eines erfindungsgemäßen Time-of-Flight-Sensormoduls zu entnehmen. Die Sensoranordnung 1 weist eine Platine 2 auf, welche in der gezeigten Ausführungsform starr und eben ist und insbesondere die optischen Elemente der Sensoranordnung 1 trägt. Die Sensoranordnung 1 weist zum einen eine als Laserdiode ausgebildete Lichtquelle auf, welche in der perspektivischen Darstellung der Fig. 1 jedoch nicht zu erkennen ist, da sie von der vor der Lichtquelle angeordneten Lichtoptik 3 verdeckt ist. Die Lichtoptik 3 dient der Einstellung der von der Lichtquelle bereitgestellten Laserstrahlung für das Ausleuchten einer abzubildenden Szenerie, wobei in der gezeigten Ausgestaltung eine zweiachsige Streuung des Laserlichts mittels zweier hintereinander angeordneter Zylinderlinsen vorgesehen ist, die mit senkrecht zueinander orientierter Zylinderachse als Bestandteil der Lichtoptik 3 in einem Optikgestell 11 angeordnet sind. Das Optikgestell 11 ist auf der Platine 2 angeordnet und dient der Bereitstellung von Optiken sowohl für die Lichtquelle als auch für den Lichtsensor 4. Außerdem hält das Optikgestell 11 eine Spot-Dioden-Optik 6 umfasst. Die Spot-Diode ist zur Ansteuerung und zur elektrischen Versorgung mit der Platine gekoppelt.

Die Sensoranordnung 1 weist als Weiteres einen Sicherungsbügel 9 auf, welcher die Lichtoptik 3 und das Optikgestell 11 umgreift. In der gezeigten Ausgestaltung ist der Sicherungsbügel 9 mit der Platine 2 elektrisch kontaktiert und derart mit der als Mikrocontroller ausgebildeten Steuereinrichtung 31 verbunden, dass bei Entfernung des Sicherungsbügels 9, beispielsweise infolge eines Unfalls, eine Stromversorgung der Lichtquelle unterbunden wird, um entsprechende Sicherheitsanforderungen zu erfüllen und Augenverletzungen aufgrund unvorhergesehen austretenden Laserlichts zu verhindern. Die mechanische Verbindung des Sicherungsbügels 9 mit der Platine 2 ist derart ausgebildet, dass der Sicherungsbügel außerdem zur Befestigung des Optikgestells an der Platine beiträgt.

Zur Detektion von aus der Lichtquelle ausgesendetem und danach von einer abzubildenden Szenerie zu dem Lichtsensor reflektiertem Licht ist ein als CCD-Kamera ausgebildeter Lichtsensor 4 auf der Platine angeordnet und ebenfalls mit der Steuereinrichtung 31 verbunden. Zur Fokussierung der eingesammelten Lichtstrahlung auf den Lichtsensor 4 ist eine Sensoroptik 5 vorgesehen, welche wie auch die Lichtoptik 3 von einer in einem entsprechenden Einsatz des Optikgestells 11 gehaltenen Sensoroptik 5 gehalten wird. Zur Markierung eines Zielbereichs zur anleitenden Unterstützung eines Bedieners ist die bereits erwähnte Spot-Diode 6' vorgesehen, die ebenfalls mit der Steuereinrichtung 31 verbunden ist. Zur kompakten Ausführung der Sensoranordnung 1 ist das Optikgestell 11 mittels entsprechender Steckelemente mit der Platine 2 verbunden, die ihrerseits mit einem Moduleinsatz 7 gekoppelt ist. Der Moduleinsatz 7 weist als einstückigen Bestandteil ein Steckelement 8 auf, welches zur elektrischen Kontaktierung des Time-of-Flight-Sensormoduls mit einem kraftfahrzeugseitigen Steuergerät vorgesehen ist.

In der Darstellung der Fig. 2 sind die Laserdiode 10 mit der ihr zugeordneten Lichtoptik 3 und dem entsprechenden Sicherungsbügel 9, die Sensoroptik 5 und die Spot-Dioden-Optik 6 im noch nicht in das Optikgestell 11 eingeführten Zustand dargestellt. Insbesondere ist zu entnehmen, dass das Optikgestell 11 als einstückiges Aufnahmeelement für die optischen Bestandteile der Spot-Diode 6, der Sensoroptik 5 sowie der Lichtoptik 3 ausgebildet ist, wobei die optischen Bestandteile und die Aufnahmen für die optischen Bestandteile im Optikgestell 11 derart aufeinander angepasst sind, dass ein unverzügliches Einführen und, soweit gewünscht, Arretieren in das Optikgestell 11 möglich ist, wodurch eine zügige und exakte Positionierung der genannten optischen Elemente erfolgen kann. Beispielhaft seien die Nut 12 und die zugeordnete Feder 13 der Spot-Dioden-Optik 6 genannt, mit welcher eine exakte Winkel- und Höhenpositionierung der Spot-Dioden-Optik 6 vorgenommen werden kann.

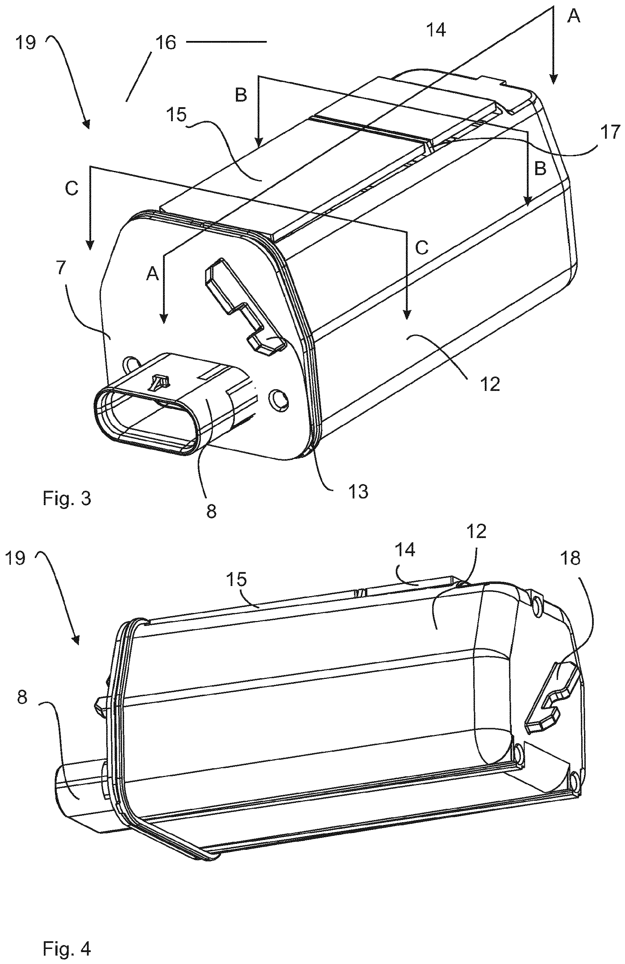

Fig. 3 ist eine Darstellung des Time-of-Flight-Sensormoduls 19 zu entnehmen, welches die in den Figs. 1 und 2 dargestellte Sensoranordnung aufweist, die in dem Gehäuse 12 aufgenommen ist. Das Gehäuse 12 schließt Staub- und weitgehend Feuchtigkeitsdicht an den Moduleinsatz 7 an. Vor der Laserdiode und dem Lichtsensor ist eine Schutzfensteranordnung 16 positioniert, wobei Laserdiode und Lichtsensor in der Darstellung der Fig. 3 nicht erkennbar sind, da sie sich innerhalb des Gehäuses befinden. Wie Fig. 3 weiterhin zu entnehmen ist, besteht die Schutzfensteranordnung 16 aus einem ersten Durchgangsfenster 14, welches einen ersten Schutzfensterabschnitt 14 darstellt sowie einem zweiten Schutzfenster 15, welches einen zweiten Schutzfensterabschnitt 15 darstellt. Zwischen dem ersten Schutzfenster 14 und dem zweiten Schutzfenster 15 ist eine Lichtbarriere 17 ausgebildet, welche in der abgebildeten Ausführungsform als Zwischenelement ausgeformt ist, welches die benachbarte Grenzfläche des ersten Schutzfensters sowie die benachbarte Grenzfläche des zweiten Schutzfensters 15 jeweils vollständig in einer Projektion abdeckt, da sich das Zwischenelement entlang der gesamten Dicke jedes der Schutzfensterabschnitte in eine Durchstrahlungsrichtung erstreckt. Die Lichtbarriere ist somit zwischen den Schutzfenstern 14 und 15 angeordnet, diese sind also vollständig optisch voneinander getrennt und ein Übertritt von Licht von dem ersten Schutzfenster zu dem zweiten Schutzfenster ist unterbunden. Die Lichtbarriere 17 ist in der vorliegenden Ausführungsform als einstückige Erhabung des Gehäuses 12 vorgesehen. Die Lichtbarriere 17 besteht wie das Gehäuse 12 in der gezeigten Ausführung aus einem Thermoplast, welches für Licht der verwendeten Lichtwellenlänge undurchlässig ist. Der Abbildung der Fig. 3 ist weiterhin ein erstes Führungselement 13 zu entnehmen, mit welchem das Gehäuse und damit das Sensormodul in eine auf die Ausformung des ersten Führungselements 13 angepasste Führungsschiene, beispielsweise an einer Fahrzeugkarosserie, eingeführt werden kann und sodann mit dem Steckelement 8 mit einer fahrzeugseitigen Steuerelektronik verbunden werden kann.

In Fig. 4 ist das TOF-Sensormodul 19 von einer anderen Perspektive aus zu sehen. Insbesondere ist zu erkennen, dass auch an dem Gehäuse 12 ein zweites Führungselement 18 angeordnet ist, so dass in Zusammenwirkung mit dem ersten Führungselement 13 das zweite Führungselement 18 zum Einführen des Sensormoduls in entsprechende Halteschienen, beispielsweise an der Fahrzeugkarosserie, geeignet ist.

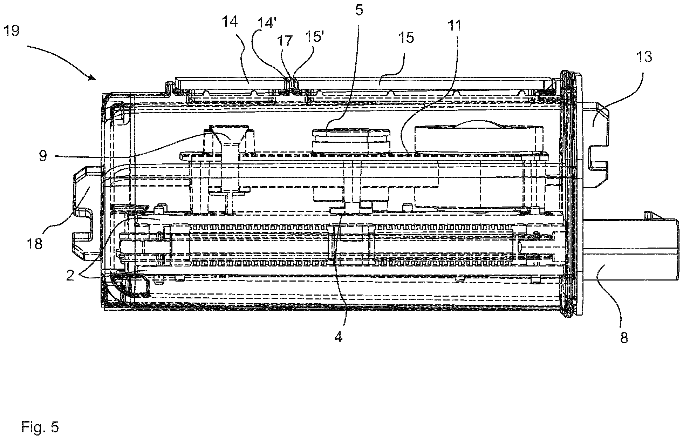

Fig. 5 ist eine Seitendarstellung des Gehäuses des TOF-Sensormoduls zu entnehmen, wobei die in dem Gehäuse befindlichen Bestandteile der Sensoranordnung 1 mit nicht durchgezogenen Linien dargestellt sind. Der Darstellung der Fig. 5 ist insbesondere zu entnehmen, dass die Erstreckung der Lichtbarriere 17 parallel zu den zentralen Sende- und Empfangsachsen des Lichtsensors 4, der Spot-Diode 6' und der als Lichtquelle genutzten Laserdiode derart bemessen ist, dass die Erstreckungen des ersten Schutzfensters 14 und des zweiten Schutzfensters 15 in dieselbe Richtung, also die Durchstrahlungsrichtung, an den benachbarten Grenzflächen 14', 15' vollständig abgedeckt werden. Dadurch wird wirksam ein Übertritt von Licht zwischen dem ersten Schutzfensterabschnitt 14 und dem zweiten Schutzfensterabschnitt 15 unterbunden, der ansonsten beispielsweise aufgrund lichtleitender Effekte und/oder durch Totalreflektion bedingte Effekte auftreten würde. Fig. 5 ist außerdem zu entnehmen, dass der erste Schutzfensterabschnitt 14 und der zweite Schutzfensterabschnitt 15 mit ihrer jeweiligen Außenfläche beziehungsweise äußeren Grenzebene parallel zu dem ebenen Bereich der Platine 2 orientiert ist. Mit anderen Worten sind die Außenflächen der Schutzfenster 14 und 15 senkrecht zu den Sende- bzw. Empfangsachsen von allen drei optischen Elementen, nämlich Lichtsensor 4, Spot-Diode 6' und Laserdiode 10, orientiert.

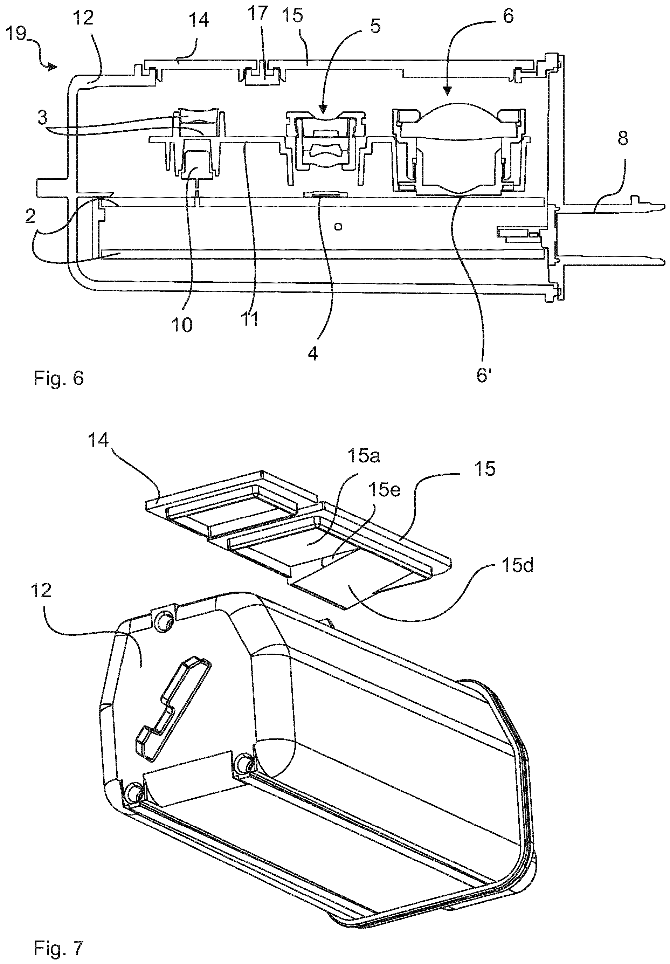

Fig. 6 ist eine Schnittdarstellung zu entnehmen, in der insbesondere die parallele Anordnung der Schutzfensteraußenflächen 14 und 15 zu den Platinenflächen 2 zu entnehmen ist.

Fig. 7 ist eine Darstellung des Sensormoduls 1 zu entnehmen, wobei der erste Schutzfensterabschnitt 14 und der zweite Schutzfensterabschnitt 15 in nicht an dem Gehäuse 12 angeordneten Zustand gezeigt sind. In der unteren Schrägansicht des zweiten Schutzfensterabschnitts 15 ist zu erkennen, dass der zweite Schutzfensterabschnitt 15 zwei optisch unterschiedlich wirksame Bereiche aufweist. Bei dem ersten optischen Abschnitt 15a handelt es sich um einen Abschnitt, welcher zur Transmission des reflektierten Lichts zu dem Lichtsensor hin wirkt und welcher in der gezeigten Ausgestaltung neben der Transmission bei parallelen Einfall- und Ausfallebenen keine weitere optische Funktion aufweist, da sowohl Außenfläche als auch Innenfläche des optischen Abschnitts 15a parallel zueinander und parallel zu der Platine 2 ausgerichtet sind. Der zweite Schutzfensterabschnitt 15 weist einen zweiten optischen Abschnitt 15b auf, welcher zur Transmission des Lichts der Spot-Diode zu dem Gehäuseäußeren vorgesehen ist. Im Gegensatz zu dem ersten optischen Abschnitt 15a weist der zweite optische Abschnitt 15b eine zusätzliche optische Funktion auf, die durch Ausbildung des zweiten optischen Abschnitts 15b als optischer Keil erreicht wird: Zwischen den beiden zum Gehäuseäußeren und zum Gehäuseinneren gerichteten Grenzflächen des zweiten optischen Abschnitts, nämlich der ersten Grenzebene und der zweiten Grenzebene 15d ist ein Keilwinkel 15e vorgesehen, der in der gezeigten Ausgestaltung wenigstens 10 Grad beträgt. Durch den Keilwinkel wird bewirkt, dass das von der Spot-Diode ausgehend den zweiten optischen Abschnitt 15b transmittierende Licht entsprechend der vorliegenden Keiloptik abgelenkt wird. Dabei kann bei entsprechender Orientierung des Sensormoduls und geeigneter Wahl des Keilwinkels 15b mit einfachen Mitteln eine Umpositionierung des dargestellten Zielbereichs bewirkt werden.

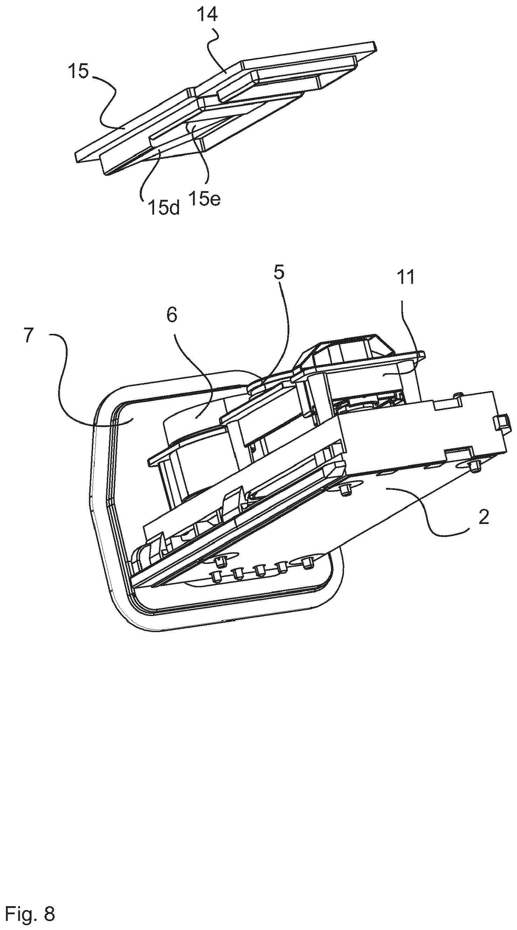

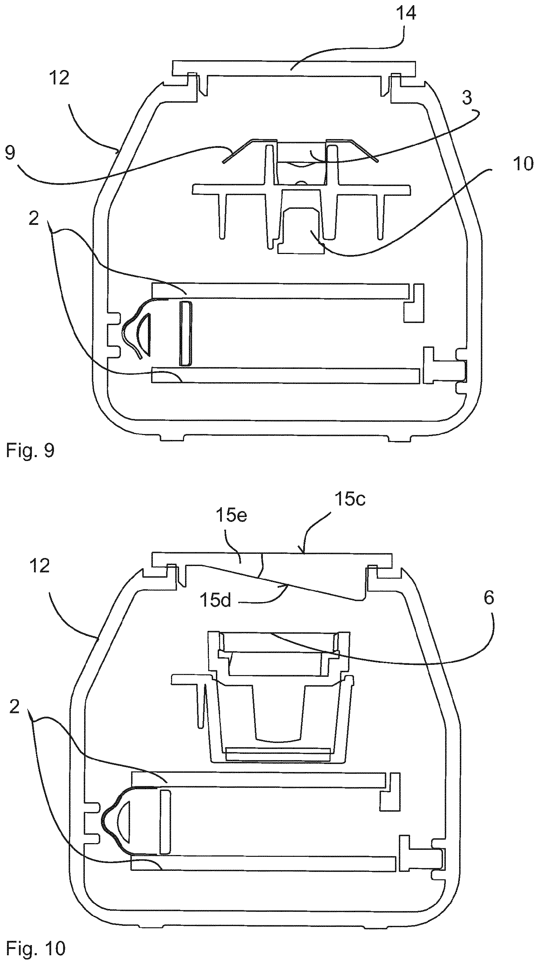

Eine weitere perspektivische Darstellung ist Fig. 8 zu entnehmen, Figs. 9 und 10 sind Schnittdarstellungen zu entnehmen.

## Patentansprüche

1. Time-of-Flight-Sensormodul (19), aufweisend ein Gehäuse (12) und eine innerhalb des Gehäuses (12) angeordnete Sensoranordnung (1), wobei die Sensoranordnung (1) aufweist:
- eine Lichtquelle (10) zum Aussenden von Licht für ein Ausleuchten einer abzubildenden Szenerie,
- einen Lichtsensor (4) zum Detektieren von aus der Lichtquelle (10) ausgesendetem und danach von der abzubildenden Szenerie reflektiertem Licht,
- eine Steuereinrichtung, die mit der Lichtquelle (10) und mit dem Lichtsensor (4) gekoppelt ist,
wobei das Gehäuse (12) eine Schutzfensteranordnung (16) aufweist, die vor der Lichtquelle (10) und vor dem Lichtsensor (4) positioniert ist zum Transmittieren von aus der Lichtquelle (10) gesendetem Licht zu einem Gehäuseäußeren durch einen ersten Schutzfensterabschnitt (14) der Schutzfensteranordnung (16) und zum Transmittieren von an der abzubildenden Szenerie reflektiertem Licht in ein Gehäuseinneres hinein durch einen zweiten Schutzfensterabschnitt (15) der Schutzfensteranordnung (16) zu dem Lichtsensor (4) hin,
wobei der erste Schutzfensterabschnitt (14) und der zweite Schutzfensterabschnitt (15) mittels einer Lichtbarriere (17) teilweise oder vollständig optisch voneinander getrennt sind.

2. Time-of-Flight-Sensormodul (19) nach Anspruch 1, **dadurch gekennzeichnet, dass** die Sensoranordnung (1) eine zumindest in einem Abschnitt ebene Platine (2) aufweist, wobei der Lichtsensor (4) und die Lichtquelle (10) in dem ebenen Abschnitt der Platine (2) angeordnet sind.

3. Time-of-Flight-Sensormodul (19) nach Anspruch 2, **dadurch gekennzeichnet, dass** der erste Schutzfensterabschnitt (14) und der zweite Schutzfensterabschnitt (15) jeweils eine Außenfläche aufweisen, die parallel zu dem ebenen Abschnitt der Platine (2) orientiert ist.

4. Time-of-Flight-Sensormodul (19) nach einem der vorhergehenden Ansprüche, **dadurch gekennzeichnet, dass** der erste Schutzfensterabschnitt (14) als ein erstes Schutzfenster ausgebildet ist und der zweite Schutzfensterabschnitt (15) als ein zweites Schutzfenster ausgebildet ist.

5. Time-of-Flight-Sensormodul (19) nach einem der vorhergehenden Ansprüche, **dadurch gekennzeichnet, dass** die Lichtbarriere (17) als zwischen dem ersten Schutzfensterabschnitt (14) und dem zweiten Schutzfensterabschnitt (15) angeordnetes Zwischenelement ausgebildet ist.

6. Time-of-Flight-Sensormodul (19) nach einem der vorhergehenden Ansprüche, **dadurch gekennzeichnet,**
- **dass** die Lichtbarriere (17) sich wenigstens 50 %, bevorzugt wenigstens 90 %, der Dicke einer der Lichtbarriere (17) benachbarten Grenzfläche des ersten Schutzfensterabschnitts (14) abdeckend erstreckt und/oder
- **dass** die Lichtbarriere (17) sich entlang wenigstens 50 %, bevorzugt wenigstens 90 %, einer Längserstreckung der benachbarten Grenzfläche des ersten Schutzfensterabschnitts (14) erstreckt.

7. Time-of-Flight-Sensormodul (19) nach einem der vorhergehenden Ansprüche, **dadurch gekennzeichnet, dass** die Lichtbarriere (17) einstückiger Bestandteil des Gehäuses (12) ist.

8. Time-of-Flight-Sensormodul (19) nach einem der vorhergehenden Ansprüche, **dadurch gekennzeichnet, dass** die Sensoranordnung (1) eine mit der Steuereinrichtung, bevorzugt auch mit der Platine, gekoppelte Spot-Diode (6') aufweist zum Anzeigen eines Zielbereichs mittels Beleuchtens des Zielbereichs mit für das gesunde menschliche Auge sichtbarem Licht, das durch die Schutzfensteranordnung (16) transmittiert wird.

9. Time-of-Flight-Sensormodul (19) nach Anspruch 8, **dadurch gekennzeichnet, dass** der zweite Schutzfensterabschnitt (15) einen ersten optischen Abschnitt (15a) zur Transmission von an der abzubildenden Szenerie reflektierten Lichts zu dem Lichtsensor (4) hin und einen zweiten optischen Abschnitt (15b) zur Transmission von Licht der Spot-Diode (6') zu dem Gehäuseäußeren aufweist.

10. Time-of-Flight-Sensormodul (19) nach Anspruch 9, **dadurch gekennzeichnet, dass** eine erste Grenzebene (15c) des zweiten optischen Abschnitts (15b) und eine zweite Grenzebene (15d) des zweiten optischen Abschnitts (15b) einen Winkel (15e) einschließen, der wenigstens 10 Grad, bevorzugt wenigstens 20 Grad, beträgt.

11. Time-of-Flight-Sensormodul (19) nach Anspruch 9 oder nach Anspruch 10, **dadurch gekennzeichnet, dass** der zweite optische Abschnitt (15b) ein Keiloptikelement ist.

12. Time-of-Flight-Sensormodul (19) nach einem der vorhergehenden Ansprüche, **dadurch gekennzeichnet,**
**dass** der Lichtsensor (4) einen CCD-Chip aufweist, und/oder
**dass** die Lichtquelle (10) eine Laserdiode und/oder eine LED aufweist.
